# EUROPÄISCHE PATENTSCHRIFT

(11) **EP 3 751 985 B1**
(45) Veröffentlichungstag und Bekanntmachung des Hinweises auf die Patenterteilung: **10.04.2024**
(21) Anmeldenummer: 19706358.9
(22) Anmeldetag: 14.02.2019
(51) Int. Cl.: A01G 25/09, A01G 31/06

(54) **VORRICHTUNG ZUM BEFEUCHTEN UND/ODER DÜNGEN VON PFLANZEN**
DEVICE FOR MOISTENING AND/OR FERTILIZING PLANTS
DISPOSITIF POUR L'HUMIDIFICATION ET/OU LA FERTILISATION DE PLANTES

(30) Priorität: 15.02.2018 AT 501402018; 11.04.2018 AT 503052018
(43) Veröffentlichungstag der Anmeldung: 23.12.2020
(73) Patentinhaber: PhytonIQ GmbH, 7400 Oberwart (AT)
(72) Erfinder: PARAPATITS, Martin, 7400 Oberwart (AT)
(74) Vertreter: Puchberger & Partner Patentanwälte
(86) Internationale Anmeldenummer: PCT/AT2019/060056
(87) Internationale Veröffentlichungsnummer: WO 2019/157548

(56) Entgegenhaltungen:
- DE-A1- 19 740 336
- US-A1- 2014 311 029

## Beschreibung

Die Erfindung betrifft ein System zum Befeuchten und/oder Düngen von Pflanzen umfassend eine bewegliche Sprühlanze mit wenigstens einer an der Sprühlanze angeordneten Sprühdüse gemäß dem unabhängigen Patentanspruch 1.

Beim industriellen Anbau von Pflanzen ist der effiziente und nachhaltige Umgang mit Wasser, Düngemitteln oder anderen Stoffen von zentraler Bedeutung, um eine ökonomische Produktion zu gewährleisten. Zusätzlich ist die gleichmäßige Versorgung einer Vielzahl von Pflanzen mit Wasser und Nährstoffen wichtig, um ein homogenes Wachstumsergebnis zu erzielen.

Eine zu diesem Zweck bereits im Stand der Technik erfolgreich eingesetzte Methode ist die sogenannte Aeroponik. Hierbei sind die Pflanzen in einer Ebene fixiert, wobei insbesondere die unterirdischen Pflanzenteile, also beispielsweise Wurzeln oder Knollen, ohne festes Substrat, wie beispielsweise Erde, vorliegen. Zur Versorgung mit Wasser, Nährstoffen und anderen Hilfsstoffen werden die unterirdischen Pflanzenteile regelmäßig mit einem Aerosol von Wasser oder einer Nährlösung benetzt.

Neben der kontrollierten Aufbringung von Wasser und Nährstoffen eignet sich das Verfahren der Aeroponik auch zu einer äußerst platzsparenden Kultivierung von Pflanzen in Gewächshäusern oder ähnlichem und es kann eine für die jeweilige Pflanzenart geeignete Atmosphäre geschaffen werden, um die optimalen Wachstumsbedingungen zu gewährleisten.

Aus der US-amerikanischen Patentanmeldung US 2014/137471 A1 oder aus der internationalen Patentanmeldung WO 98/56237 A1 sind stationäre

Bewässerungsvorrichtungen für aeroponische Systeme bekannt, wobei Rohrleitungen zur Verteilung des Wassers bzw. der Nährlösung eingesetzt werden. Diese Vorrichtungen sind jedoch in der Konstruktion sehr aufwändig, da im Wesentlichen für jede zu bewässernde Position eine eigene Zerstäubungsvorrichtung notwendig ist.

In den US-amerikanischen Patentanmeldungen US 2017/202163 A1 und US 4 965 962 A werden gattungsgemäße mobile Sprühvorrichtungen auf einem verfahrbaren Trägerwagen beschrieben, die dazu eingerichtet sind, die unterirdischen Pflanzenteile von Pflanzen mit Wasser und Nährstoffen zu versorgen. Derartige bewegliche Bewässerungssysteme bieten den Vorteil, dass zur Herstellung der Bewässerungsinfrastruktur im Vergleich zu stationären Vorrichtungen ein geringerer konstruktiver Aufwand notwendig ist.

Die US-Patentanmeldung US 2014/0311029 A1 beschreibt ein aeroponisches System mit mehreren Pflanzenstützebenen und einer beweglich gelagerten Sprühlanze zur Ausgabe von Flüssigkeiten.

Bewässerungsvorrichtungen für bestehende aeroponische Systeme mit bewegbaren Sprühvorrichtungen haben jedoch den Nachteil, dass durch die Anordnung der Sprühvorrichtungen auf einem verfahrbaren Trägerwagen jeweils nur ein eingeschränkter Bereich bewässert werden kann, und dass sich die Antriebsvorrichtungen für die bewegbaren Bewässerungsvorrichtungen im besprühten Bereich befinden, wodurch diese regelmäßig mit Wasser, Nährlösung oder Ähnlichem (im Folgenden allgemein als "Medium" bezeichnet) benetzt werden, was zu einer erhöhten Korrosion und einem hohen Materialverschleiß führen kann.

Die Aufgabe der Erfindung ist es somit, die Nachteile des Standes der Technik zu überwinden und ein verbessertes aeroponisches System zu schaffen.

Die Aufgabe der Erfindung wird durch die kennzeichnenden Merkmale des unabhängigen Patentanspruchs gelöst. Es ist vorgesehen, dass eine vorzugsweise lineare Führungsschiene vorgesehen ist, wobei die Sprühlanze in einer parallel zur Führungsschiene verlaufenden Trajektorie in der Führungsschiene beweglich geführt ist und sich im Wesentlichen normal auf diese Trajektorie erstreckt, und ein Antrieb, vorzugsweise ein Linearantrieb, zur Bewegung der Sprühlanze im Bereich der Führungsschiene angeordnet ist. Erfindungsgemäß ist vorgesehen, dass die Sprühlanze beabstandet unterhalb oder oberhalb der Pflanzenstützebene angeordnet ist und wobei dass sich die Pflanzenstützebene im Wesentlichen parallel zu der durch die Bewegung der Sprühlanze aufgespannten Bewegungsebene erstreckt.

Hierdurch wird erreicht, dass ein möglichst großer Bereich mit dem Medium benetzt werden kann. Somit kann ein ökonomischer Betrieb eines derartigen aeroponischen Systems gewährleistet werden. Außerdem wird durch Anordnung des Antriebs im Bereich der Führungsschiene sichergestellt, dass dieser sich nicht im besprühten Bereich befindet. Der Antrieb kann insbesondere direkt an der Führungsschiene angeordnet oder mit der Führungsschiene verbunden sein.

Gegebenenfalls kann vorgesehen sein, dass an der Sprühlanze Aktoren, Sensoren oder Kameras angeordnet sind. Die Aktoren können beispielsweise zur Aussaat von Samen oder zur Ernte von Pflanzen oder Früchten eingesetzt werden. Die Sensoren können beispielsweise zur Diagnostik von Pflanzen eingesetzt werden.

Durch den Einsatz von an der Sprühlanze angeordneten Aktoren, Sensoren oder Kameras können zusätzlich zur Benetzung der Pflanzen mit dem Medium weitere Bearbeitungs- oder Analyseschritte durchgeführt werden.

So kann es beispielsweise möglich sein, durch eine geeignete Auswahl von Aktoren, Sensoren bzw. Kameras ein vollautomatisches aeroponisches System zu schaffen, welches von der Aussaat der Samen bis zur Ernte der Pflanzen keinen manuellen Eingriff des Benutzers erfordert. Gegebenenfalls können Kameras zur visuellen Überprüfung des Wachstumsfortschritts der Pflanzen eingesetzt werden. Gegebenenfalls ist es auch möglich, dass Sensoren zur Überprüfung der Temperatur, zur Bestimmung der relativen Luftfeuchtigkeit, zur Bestimmung der Gaszusammensetzung in der Atmosphäre und für andere Analysezwecke eingesetzt werden.

Gegebenenfalls kann vorgesehen sein, dass die Sprühlanze über ein vorzugsweise stabförmiges Verbindungsstück an der Führungsschiene gelagert ist.

Dadurch wird erreicht, dass die Sprühlanze von der Führungsschiene beabstandet angeordnet ist. Das Medium kann gegebenenfalls Stoffe enthalten, die auf mechanische Bauteile korrosiv wirken, insbesondere wenn Metallsalze oder Ähnliches enthalten sind. Jedoch auch wenn das Medium reines Wasser umfasst, kann eine dauerhafte Benetzung der beweglichen Teile, insbesondere des Antriebs und der Führungsschiene, zu Korrosion führen. Durch die Verwendung eines Verbindungsstücks kann die Sprühlanze beabstandet von der Führungsschiene angeordnet werden, wodurch die Benetzung der beweglichen Teile mit dem Medium vermindert wird. Hierdurch kann gegebenenfalls die Lebensdauer der erfindungsgemäßen Vorrichtung erhöht werden.

Gegebenenfalls kann vorgesehen sein, dass das Verbindungsstück zur Verstellbarkeit der Position der Sprühlanze eine Vielzahl an Befestigungsmitteln, vorzugsweise Rastöffnungen, umfasst.

Dadurch kann erreicht werden, dass eine einfache Anpassbarkeit der Position der Sprühlanzen, also insbesondere eine Anpassung der Bewässerungshöhe oder der Bewässerungsposition, möglich ist. Beispielsweise kann die Position der Sprühlanzen dadurch an die Höhe der Pflanzen oder an die Länge der Wurzeln angepasst werden.

Gegebenenfalls kann vorgesehen sein, dass die Sprühlanze drei bis zehn Sprühdüsen umfasst. Die Sprühdüsen können gegebenenfalls dazu ausgeführt sein, ein Aerosol mit einer Tröpfchengröße von 1µm bis 1 00µm zu erzeugen, wobei das den Sprühdüsen zugeführte Medium gegebenenfalls mit einem Druck von 8 bar bis 100 bar aufgegeben werden kann.

Durch das Verwenden mehrerer Sprühdüsen kann eine möglichst gleichmäßige Verteilung des Mediums über die gesamte Ausdehnung der Sprühlanze gewährleistet werden.

Die Zerstäubungseffizienz der Sprühdüsen kann unter anderem über den Druck des zugeleiteten Mediums reguliert werden. Über die Tröpfchengröße kann die Verteilung des Aerosols gesteuert werden.

Gegebenenfalls kann vorgesehen sein, dass das Aerosol ein Nährmedium und/oder Wasser umfasst.

Wenn das Aerosol ein Nährmedium umfasst, kann die erfindungsgemäße Vorrichtung nicht nur zum Bewässern von Pflanzen, sondern auch zum Düngen von Pflanzen eingesetzt werden. Vorzugsweise kann das Nährmedium alle für das gewünschte Wachstum der Pflanzen notwendigen Nährstoffe enthalten. Das Aerosol kann gegebenenfalls auch reines Wasser, insbesondere Wasser ohne weitere Zusatzstoffe, wie beispielsweise Leitungswasser, umfassen.

Gegebenenfalls kann vorgesehen sein, dass wenigstens zwei Sprühdüsen zur Erzeugung einander überlappender Sprühkegel ausgeführt sind.

Um eine möglichst effiziente Abdeckung des gesamten zu bewässernden Bereichs zu ermöglichen und insbesondere um keine Stellen unbewässert zu lassen, können die Sprühkegel zweier Sprühdüsen gegebenenfalls überlappen.

Gegebenenfalls kann vorgesehen sein, dass an der Sprühlanze Gasauslassöffnungen vorgesehen sind, oder dass eine Gasauslasslanze in der Führungsschiene beweglich geführt ist.

Um eine für das Pflanzenwachstum bevorzugte Gasatmosphäre bereitzustellen, kann die erfindungsgemäße Vorrichtung gegebenenfalls über Mittel zur Zufuhr von Gasen verfügen. Dazu können an einer mit Sprühdüsen ausgestatteten Sprühlanze zusätzlich Gasauslassöffnungen vorgesehen sein. Gegebenenfalls können auch separate Gasauslasslanzen vorgesehen sein, die über keine Sprühdüsen, sondern über Gasauslassöffnungen verfügen, wobei die Gasauslasslanzen von einem eigenständigen Antrieb oder von demselben Antrieb, der zur Bewegung der Sprühlanze vorgesehen ist, bewegt werden können.

Das durch die Gasauslassöffnungen oder über die Gasauslasslanzen ausgebrachte Gas kann beispielsweise Kohlendioxid umfassen. Die Zuführung des Gases kann bevorzugt über Gasleitungen erfolgen.

Gegebenenfalls kann vorgesehen sein, dass der Antrieb als Riemenantrieb ausgebildet ist, wobei der Riemenantrieb einen stationär angeordneten Antriebsmotor umfasst.

Ein stationär angeordneter Antriebsmotor ermöglicht eine einfache Konstruktion des Antriebs. Gegebenenfalls kann vorgesehen sein, dass der stationär angeordnete Antriebsmotor in einem Bereich angeordnet ist, der außerhals des durch die Sprühlanzen befeuchteten Bereichs liegt. Dadurch wird der Antriebsmotor vor Feuchtigkeit geschützt, was die Lebensdauer des Motors erhöhen kann.

Gegebenenfalls kann vorgesehen sein, dass die Sprühlanze durch einen endlos umlaufenden Antriebsriemen bewegbar ist, wobei der Antriebsriemen durch Umlenkrollen geführt ist.

Dadurch wird eine einfache und effiziente Bewegung der Sprühlanzen erreicht. Der Antriebsriemen kann als Antriebsseil, Antriebsband, Antriebskette oder dergleichen ausgebildet sein. Gegebenenfalls kann eine erste Umlenkrolle vorgesehen sein, die direkt durch den Antriebsmotor angetrieben wird. Dies bedeutet, dass die erste Umlenkrolle direkt mit der Antriebswelle des Antriebsmotors verbunden sein kann. Alternativ kann zwischen Antriebsmotor und erster Umlenkrolle auch eine Übersetzung vorgesehen sein.

Die Erfindung betrifft ein System zur substratlosen Kultivierung von Pflanzen umfassend eine oben beschriebene Vorrichtung sowie eine vorzugsweise im Wesentlichen horizontal ausgerichtete Pflanzenstützebene. Diese Pflanzenstützebene ist dazu geeignet, die Pflanzen im Bereich ihres Wurzelstocks zu stabilisieren. Dabei ist die Sprühlanze zur Befeuchtung unterirdischer Pflanzenteile beabstandet unterhalb oder oberhalb der Pflanzenstützebene angeordnet, wobei sich die Pflanzenstützebene im Wesentlichen parallel zu der durch die Bewegung der Sprühlanze aufgespannten Bewegungsebene erstreckt.

Gegebenenfalls kann vorgesehen sein, dass die Sprühlanze derart ausgeführt ist, dass im Wesentlichen die gesamte Fläche der Pflanzenstützebene befeuchtet und/oder gedüngt werden kann.

Um einen Kontakt der Führungsschiene und des Antriebs mit Medium zu minimieren, kann erfindungsgemäß gegebenenfalls vorgesehen sein, dass die Führungsschiene oberhalb oder unterhalb der Pflanzenstützebene angeordnet ist. Die Sprühlanze kann dann gegebenenfalls mit einem Verbindungsstück mit der Führungsschiene verbunden sein. Durch eine derartige Anordnung kann eine dauerhafte Beaufschlagung der Führungsschiene und des Antriebs mit dem Medium verhindert werden, was gegebenenfalls zu einer längeren Laufzeit und einem geringeren Wartungsaufwand der erfindungsgemäßen Vorrichtung führen kann.

Gegebenenfalls kann vorgesehen sein, dass in der Pflanzenstützebene ein vorzugsweise linear verlaufender Spalt vorgesehen ist, durch den ein Verbindungsstück zur Verbindung der Sprühlanze mit der Führungsschiene ragt, welches zur Verstellbarkeit der Position der Sprühlanze eine Vielzahl an Befestigungsmitteln, vorzugsweise Rastöffnungen, umfasst.

Dadurch kann erreicht werden, dass sich die Führungsschiene und die Antriebsvorrichtung oberhalb der Pflanzenstützebene befinden, was zu einer weiteren Reduktion der Belastung der Führungsschiene und des Antriebs durch das gegebenenfalls korrosiv wirkende Nährmedium führen kann. Ferner kann dadurch auch eine einfache Wartung des Antriebs und der Führungsschiene ermöglicht werden, da auf den Bereich unterhalb der Pflanzenstützebene nicht zugegriffen werden muss. Eine Ausführung des Verbindungsstücks kann gegebenenfalls eine Verstellbarkeit der Position der Sprühlanze ermöglichen.

Gegebenenfalls kann vorgesehen sein, dass wenigstens zwei Sprühlanzen vorgesehen sind. Dabei kann wenigstens eine Sprühlanze vorzugsweise oberhalb der Pflanzenstützebene angeordnet sein und wenigstens eine Sprühlanze kann vorzugsweise unterhalb der Pflanzenstützebene angeordnet sein.

Dadurch kann erreicht werden, dass die erfindungsgemäße Vorrichtung gleichzeitig nicht nur zur Befeuchtung der unterirdischen Pflanzenteile eingesetzt werden kann, sondern auch eine Befeuchtung von oberirdischen Pflanzenteilen möglich ist.

Gegebenenfalls kann vorgesehen sein, dass die wenigstens zwei Sprühlanzen über ein gemeinsames Verbindungsstück an der Führungsschiene gelagert sind und über einen gemeinsamen Antrieb bewegbar sind. Damit wird eine synchronisierte Bewegung mehrerer Sprühlanzen unter Einsatz von lediglich einem Antrieb ermöglicht.

Gegebenenfalls kann jedoch auch vorgesehen sein, dass die Sprühlanzen unabhängig voneinander an getrennten Führungsschienen gelagert sind und über unabhängige Antriebe bewegbar sind. Dadurch wird eine unabhängige Bewegung der mehreren Sprühlanzen ermöglicht.

Gegebenenfalls kann vorgesehen sein, dass die Vorrichtung in einer Wanne angeordnet ist oder eine Wanne umfasst, deren Wannenboden gegenüber der Pflanzenstützebene geneigt ist und vorzugsweise einen Neigungswinkel von 0,5° bis 5° aufweist.

Dadurch wird erreicht, dass gegebenenfalls überschüssiges Medium, welches sich im unteren Teil des Systems ansammelt, effektiv abgeführt werden kann und sich keine stehende Flüssigkeit im unteren Teil des erfindungsgemäßen Systems bilden kann.

Gegebenenfalls kann vorgesehen sein, dass der Wannenboden einen Ablauf zur Sammlung und gegebenenfalls Rückführung des aufgebrachten Mediums umfasst. Dadurch kann das überschüssige Medium aufgesammelt werden und eine Wiedereinführung in das Sprühsystem ist möglich.

Gegebenenfalls kann vorgesehen sein, dass eine Beleuchtungsvorrichtung vorgesehen ist, wobei die Beleuchtungsvorrichtung vorzugsweise im Bereich über der Pflanzenebene angeordnet ist.

Gegebenenfalls kann vorgesehen sein, dass das System eine Rahmenkonstruktion umfasst, und dass wenigstens eine Pflanzenstützebene relativ zur Rahmenkonstruktion bewegbar gelagert ist.

Durch die bewegbare Lagerung einer Pflanzenstützebene beziehungsweise mehrerer Pflanzenstützebenen wird ein leichter Zugriff auf einzelne Pflanzenstützebenen ermöglicht. So kann beispielsweise das Ernten von Pflanzen oder Früchten, sowie eine manuelle Pflege der Pflanzen, wie auch eine Neubesetzung der Pflanzenstützebene leicht durchgeführt werden.

Gegebenenfalls kann vorgesehen sein, dass die Pflanzenstützebene in einer im Wesentlichen horizontal verlaufenden Ebene, vorzugsweise in einer parallel zur Bewegungsebene der Sprühlanze verlaufenden Ebene, bewegbar gelagert ist.

Gegebenenfalls kann vorgesehen sein, dass an der Pflanzenstützebene Bewegungsmittel angeordnet sind, wobei die Bewegungsmittel vorzugsweise Laufrollen oder Teleskopstangen umfassen.

An der Pflanzenstützebene angeordnete Bewegungsmittel dienen der Reibungsverringerung zwischen der Rahmenkonstruktion und der Pflanzenstützebene, wodurch ein geringerer Kraftaufwand bei Ausziehen der Pflanzenstützebene notwendig ist. Sind als Bewegungsmittel Laufrollen vorgesehen, können diese vorzugsweise in Führungsschienen angeordnet sein. Als Bewegungsmittel können neben Laufrollen und Teleskopstangen beliebige andere Vorrichtungen vorgesehen sein, die dem Zweck der Reibungsverringerung beim Ausziehen der Pflanzenstützebene dienen.

Gegebenenfalls kann vorgesehen sein, dass innerhalb der Rahmenkonstruktion zum Schutz der Bewegungsmittel Abdeckprofile vorgesehen sind, wobei die Abdeckprofile die Bewegungsmittel wenigstens von oben bedecken.

Die Aufbringung von Wasser und Düngemitteln innerhalb des erfindungsgemäßen Systems kann zu einer Leistungsbeeinträchtigung der Bewegungsmittel beispielsweise durch Korrosion führen. Abdeckprofile schützen die Bewegungsmittel vor übermäßiger Beaufschlagung mit Flüssigkeit. Eine Abdeckung der Bewegungsmittel von der Oberseite schützt die Bewegungsmittel insbesondere vor dem Kontakt mit absinkenden Aerosoltröpfchen.

Gegebenenfalls kann vorgesehen sein, dass an zwei zueinander parallel verlaufenden Außenkanten der Pflanzenstützebene Bewegungsmittel angeordnet sind.

Gegebenenfalls kann vorgesehen sein, dass an zwei zueinander parallel verlaufenden Außenkanten der Pflanzenstützebene je sechs bis zwölf Laufrollen, vorzugsweise je acht bis zehn Laufrollen, angeordnet sind.

Gegebenenfalls kann vorgesehen sein, dass die Pflanzenstützebene vollständig aus der Rahmenkonstruktion ausziehbar ist.

Ist die Pflanzenstützebene vollständig aus der Rahmenkonstruktion ausziehbar bzw. entfernbar, kann diese einfach transportiert und manipuliert werden. Auch ein Transfer zu weiteren Vorrichtungen, wie etwa erfindungsgemäßen Systemen mit anderen Wachstumsbedingungen oder auch ein Transfer auf Lager- oder Transportvorrichtungen wird dadurch ermöglicht. Vorteilhafterweise kann die Manipulation der ausziehbaren Pflanzenstützebenen automatisiert mit Hilfe von Robotern erfolgen.

Weitere Merkmale der Erfindung ergeben sich aus den Patentansprüchen, den Figuren und den Ausführungsbeispielen.

Im Folgenden wird die Erfindung anhand zweier konkreter Ausführungsbeispiele im Detail erörtert. Es zeigen:
Fig. 1 a: Eine Frontalansicht einer ersten Ausführungsform eines erfindungsgemäßen Systems mit einer mittigen Antriebsanordnung;
Fig. 1b: Eine seitliche Ansicht der ersten Ausführungsform eines erfindungsgemäßen Systems mit einer mittigen Antriebsanordnung;
Fig. 2a: Eine Frontalansicht einer zweiten Ausführungsform eines erfindungsgemäßen Systems mit einer seitlichen Antriebsanordnung;
Fig. 2b: Eine seitliche Ansicht der zweiten Ausführungsform eines erfindungsgemäßen Systems mit einer seitlichen Antriebsanordnung;
Fig. 3: Eine Frontalansicht einer dritten Ausführungsform eines erfindungsgemäßen Systems mit einer seitlichen Antriebsanordnung sowie einer ausziehbaren Pflanzenstützebene;
Fig. 4: Eine seitliche Ansicht einer vierten Ausführungsform eines erfindungsgemäßen Systems mit einer seitlichen Antriebsanordnung.

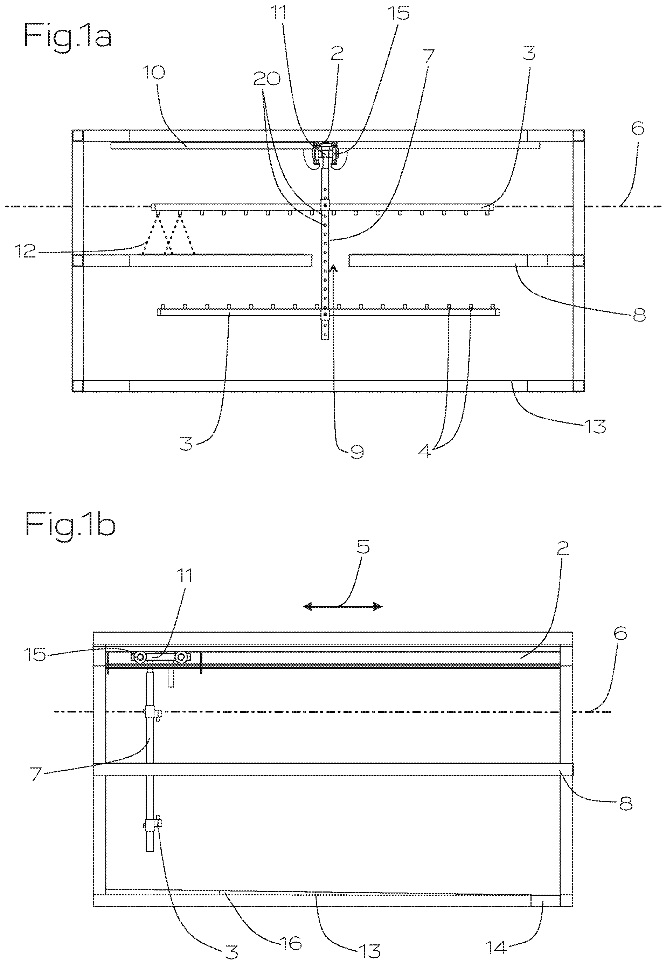

Die Fig. 1a und 1b zeigen eine Frontalansicht und eine seitliche Ansicht eines erfindungsgemäßen Systems zur aeroponischen Kultivierung von Pflanzen gemäß einem ersten Ausführungsbeispiel. Zur Vereinfachung der Illustration sind in diesem Ausführungsbeispiel keine Pflanzen dargestellt.

Das erfindungsgemäße System umfasst zwei in einer Bewegungsebene 6 bzw. parallel zur Bewegungsebene 6 entlang einer normal auf die Figur verlaufenden Bewegungsrichtung 5 bewegbare Sprühlanzen 3. In diesem Ausführungsbeispiel sind an jeder der beiden Sprühlanzen 3 sechzehn Sprühdüsen 4 angeordnet. Die Sprühlanzen 3 mit den Sprühdüsen 4 sind über ein Verbindungsstück 7 miteinander verbunden und gemeinsam in einer Führungsschiene 2 bewegbar gelagert. Durch einen Linearantrieb 11 können die Sprühlanzen 3 entlang der Bewegungsrichtung 5 hin und her bewegt werden. Zur Minimierung des Reibungswiderstandes sind Rollen 15 vorgesehen, die mit der Führungsschiene 2 in Eingriff stehen.

Im Bereich oberhalb der Pflanzenstützebene 8 ist eine Beleuchtungsvorrichtung 10 angeordnet. Diese dient der Versorgung der Pflanzen mit Licht. Bevorzugt ist das von der Beleuchtungsvorrichtung 10 ausgestrahlte Licht in der spektralen Zusammensetzung für ein bestmögliches Pflanzenwachstum ausgelegt.

In diesem Ausführungsbeispiel weist das Verbindungsstück 7 Rastöffnungen 20 auf, an denen die Sprühlanze 3 befestigt werden kann. Somit wird eine Höhenverstellbarkeit der Sprühlanze 3 abhängig von der Höhe der Pflanzen und anderen Faktoren ermöglicht.

Die Sprühdüsen 4 sind in einem derartigen Abstand zueinander angeordnet, dass die von benachbarten Sprühdüsen 4 erzeugten Sprühkegel 12 einander überlappen. So wird eine flächendeckende Benetzung der Pflanzenstützebene 8 und der darauf angeordneten Pflanzen gewährleistet. Zur Vereinfachung der Darstellung sind in der Fig. 1a nur zwei Sprühkegel 12 gezeigt. Je nach Druck des zugeführten Mediums und Eigenschaften der Sprühdüsen 4 können die Sprühkegel 12 unterschiedliche Öffnungswinkel aufweisen.

In diesem Ausführungsbeispiel ist eine erste Sprühlanze 3 über der Pflanzenstützebene 8 angeordnet, während die zweite Sprühlanze 3 unterhalb der Pflanzenstützebene 8 angeordnet ist.

Um eine freie Bewegung des Verbindungsstücks 7 zu gewährleisten, welches die beiden Sprühlanzen 3 verbindet und diese mit der Führungsschiene 2 koppelt, ist in der Pflanzenstützebene 8 ein Spalt 9 vorgesehen. Der Spalt 9 verläuft in diesem Ausführungsbeispiel in der Bewegungsrichtung 5 über die gesamte Ausdehnung der Pflanzenstützebene 8. Durch eine derartige Anordnung wird ermöglicht, dass sowohl Pflanzenteile unterhalb der Pflanzenstützebene 8 als auch Pflanzenteile oberhalb der Pflanzenstützebene 8 über zwei Sprühlanzen 3 mit Medium versorgt werden können, wobei jedoch nur ein Antrieb 11 notwendig ist.

Die Zuleitung des Mediums zu den Sprühdüsen 4 erfolgt über in diesem Ausführungsbeispiel nicht dargestellte Leitungen. In diesem Ausführungsbeispiel sind zwei voneinander getrennt verlaufende Leitungen vorgesehen, die jeweils die Sprühdüsen 4 der im Bereich oberhalb der Pflanzenstützebene 8 angeordneten Sprühlanze 3 und die Sprühdüsen 4 der im Bereich unterhalb der Pflanzenstützebene 8 angeordneten Sprühlanze 3 mit einem unterschiedlichen Medium versorgen können. Dies kann insbesondere vorteilhaft sein, wenn die oberirdischen Pflanzenteile, die oberhalb der Pflanzenstützebene 8 angeordnet sind, nicht mit der Nährlösung in Kontakt kommen sollen, die für die unterirdischen Pflanzenteile, welche sich unterhalb der Pflanzenstützebene 8 befinden, vorgesehen ist. Gegebenenfalls kann jedoch auch nur eine Zuleitung vorgesehen werden, wodurch beiden Sprühlanzen 3 dasselbe Medium zugeführt wird.

Der untere Teil des erfindungsgemäßen Systems ist in diesem Ausführungsbeispiel als im Wesentlichen wasserundurchlässige Wanne 13 ausgebildet. Dabei weist der Boden der Wanne 13 einen Neigungswinkel 16 auf, um überschüssiges Medium, das von den Pflanzen nicht aufgenommen wurde, ablaufen zu lassen. Der Neigungswinkel 16 weist in diesem Ausführungsbeispiel einen Winkel von etwa 1° auf. In nicht gezeigten Ausführungsbeispielen kann der Neigungswinkel 16 jedoch auch andere Werte annehmen.

Überschüssiges Medium kann mittels eines Ablaufs 14 abgeführt werden. Eine Rückführung des Mediums in das System, insbesondere eine Ausführung als Kreislaufsystem ist bevorzugt, jedoch in diesem Ausführungsbeispiel nicht dargestellt. Im bestimmungsgemäßen Betrieb des erfindungsgemäßen Systems sind die Pflanzen im Bereich der Pflanzenstützebene 8 angeordnet und werden von dieser stabilisiert. Dabei trennt die Pflanzenstützebene 8 im Wesentlichen die unterirdischen Pflanzenteile, also insbesondere Wurzeln oder Knollen, von den oberirdischen Pflanzenteilen, also insbesondere Blätter, Stamm, Blüten, etc. Über die Sprühdüsen 4 zerstäubtes Medium versorgt die Pflanzen mit Nährstoffen. Die Sprühlanzen 3 werden vom Linearantrieb 11 in der Bewegungsrichtung 5 hin und her bewegt, um alle Pflanzen gleichmäßig mit Medium zu versorgen. Dabei bewegen sich die Sprühlanzen 3 in der Bewegungsebene 6 oder gegebenenfalls parallel dazu.

Medium, welches von den Pflanzen nicht aufgenommen wird, tropft von diesen ab und gelangt in die Wanne 13, die sich im unteren Bereich der erfindungsgemäßen Vorrichtung befindet. Durch den Neigungswinkel 16 der Wanne 13 wird das überschüssige Medium zu einem Ablauf 14 geleitet.

Bei der Materialwahl zur Ausführung des erfindungsgemäßen Systems werden gegebenenfalls korrosionsbeständige Materialien bevorzugt. Dies gilt insbesondere für Bereiche, die oft mit Wasser oder salzhaltigen Lösungen in Kontakt kommen. In diesem Ausführungsbeispiel sind die Rollen 15 und die Führungsschiene 2 aus Edelstahl gebildet. Jedoch beschränkt sich die Erfindung nicht auf dieses Material. In anderen Ausführungsbeispielen können andere Materialien vorgesehen sein.

Auch beide Sprühbalken 3 sind aus Edelstahl ausgeführt, die Länge der Sprühbalken beträgt etwa 170 cm. Die Sprühdüsen 4 sind aus Kunststoff ausgeführt. In anderen Ausführungsbeispielen können die Sprühbalken 3 und Sprühdüsen 4 jedoch aus anderen metallischen und nichtmetallischen Materialien gebildet sein oder diese umfassen. Je nach Anforderung können die Sprühbalken 3 andere Längen aufweisen, beispielsweise 100 cm oder 200 cm.

Die Pflanzenstützebene 8 ist in diesem Ausführungsbeispiel aus einer Anordnung von sechs nicht gezeigten Gittern aus Kunststoff jeweils mit einer Größe von etwa 87 cm x 63 cm gebildet. Dabei sind je drei dieser Gitter zu beiden Seiten des Spalts 9 angeordnet. Die Gitter werden in einer nicht gezeigten Haltevorrichtung aufgenommen. In anderen Ausführungsbeispielen kann die Pflanzenstützebene 8 einstückig ausgebildet sein. Gegebenenfalls kann die Pflanzenstützebene 8 aus Edelstahl oder Kunststoff gebildet sein oder Edelstahl und/oder Kunststoff umfassen.

Der Linearantrieb 11 ist in diesem Ausführungsbeispiel ein geregelter Servomotor mit einem Untersetzungsgetriebe und einem mittleren Drehmoment von etwa 12 Nm. Die Kraftübertragung erfolgt in diesem Ausführungsbeispiel über eine Zahnstange mit Ritzel. In anderen nicht gezeigten Ausführungsbeispielen kann der Antrieb beispielsweise auch über einen Zahnriemenantrieb erfolgen. Die maximale Bewegungsgeschwindigkeit der Sprühbalken 3 beträgt in diesem Ausführungsbeispiel etwa 1,5 m/s.

In diesem Ausführungsbeispiel ist der Rahmen 19 des Systems aus Edelstahlrahmenprofilen, insbesondere aus Edelstahl des Typs 1.4571, gebildet. Der Querschnitt der in diesem Ausführungsbeispiel verwendeten Rahmenprofile beträgt etwa 5 cm x 5 cm.

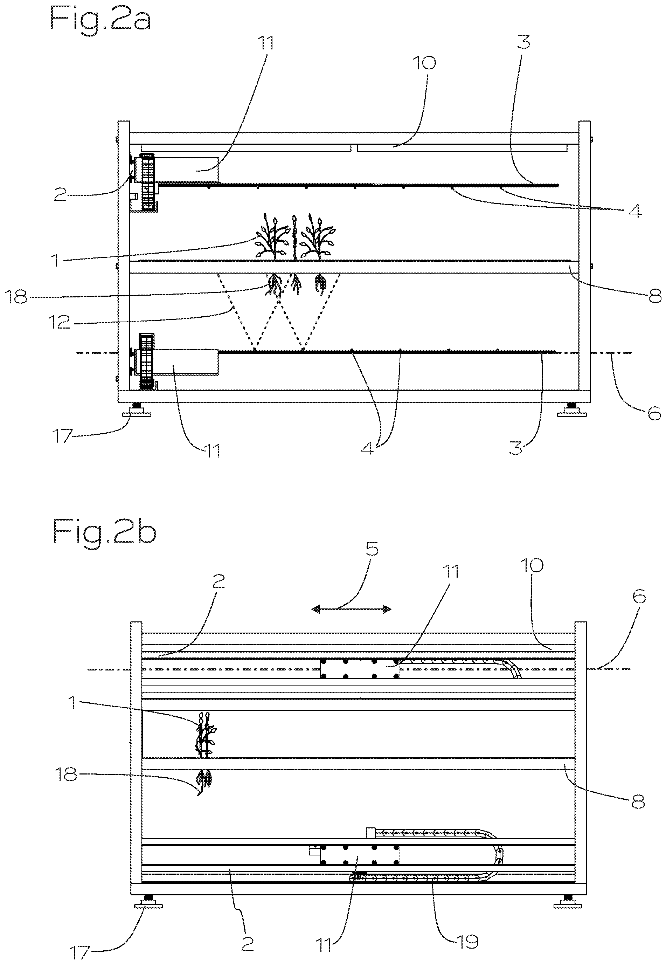

In einem anderen nicht gezeigten Ausführungsbeispiel sind mehrere Pflanzenstützebenen 8 vorgesehen, welche übereinander angeordnet sind. Dadurch kann der Platzbedarf eines erfindungsgemäßen Systems weiter reduziert werden. Die Fig. 2a und 2b zeigen eine Frontalansicht und eine seitliche Ansicht eines erfindungsgemäßen Systems zur aeroponischen Kultivierung von Pflanzen gemäß einem zweiten Ausführungsbeispiel. Die wesentlichen Komponenten stimmen mit dem ersten Ausführungsbeispiel überein. Die in diesem Ausführungsbeispiel verwendeten Materialen sind im Vergleich zu dem oben beschriebenen ersten Ausführungsbeispiel unverändert.

Jedoch ist in dem in Fig. 2a und 2b gezeigten zweiten Ausführungsbeispiel ein seitlicher Linearantrieb 11 zur Bewegung der Sprühlanzen 3 vorgesehen. Zur Illustration sind Pflanzen 1 mit unterirdischen Pflanzenteilen 18 gezeigt. Zur besseren Darstellung sind die Pflanzen 1 jedoch nur teilweise dargestellt und nicht über die gesamte Pflanzenstützebene 8 verteilt.

Durch die Ausstattung mit zwei Linearantrieben 11 sind die beiden Sprühlanzen 3 unabhängig voneinander bewegbar, wodurch eine Anpassung der Bewegung an die erforderlichen Bewässerungsbedingungen ermöglicht wird. Beispielsweise kann die Sprühlanze 3, die unterhalb der Pflanzenstützebene 8 angeordnet ist, schneller bewegt werden, um ein Austrocknen der unterirdischen Pflanzenteile 18 zu verhindern. Dahingegen kann es vorteilhaft sein, wenn die Bewegung der oberhalb der Pflanzenstützebene 8 angeordneten Sprühlanze 3 in regelmäßigen Abständen unterbrochen wird, um ein Abtrocknen des Mediums zu ermöglichen.

Ein Ablauf zur Ableitung von überschüssigem Medium ist auch im zweiten erfindungsgemäßen Ausführungsbeispiel vorgesehen, jedoch in den Figuren nicht dargestellt.

Das System ist in diesem Ausführungsbeispiel als Rahmenkonstruktion ausgeführt und auf Standfüßen 17 angeordnet, um eine Beabstandung von Boden zu ermöglichen.

In diesem Ausführungsbeispiel erfolgt die Kraftübertragung vom Antrieb über eine Zahnstange mit Ritzel. Zur Stabilisierung der Zuleitung des Mediums sind Führungen 19 vorgesehen. Die Führungen 19 umfassen flexible Kettenglieder, in denen die nicht dargestellten Zuleitungen des Mediums angeordnet sein. Dadurch können die vorzugsweise aus flexiblen Schläuchen gebildeten Zuleitungen gegen Verknicken, Verwinden oder Ähnliches geschützt werden. In anderen nicht gezeigten Ausführungsbeispielen können auch weitere übliche Führungsvorrichtungen für die Zuleitungen, insbesondere für Schläuche, verwendet werden.

In einem anderen nicht gezeigten Ausführungsbeispiel können an den Sprühlanzen 3 Gasauslassöffnungen vorgesehen sein, die der Bereitstellung einer gewünschten Gasatmosphäre dienen. Die Gasauslassöffnungen können sowohl an den Sprühlanzen 3 im Bereich unter der Pflanzenstützebene 8 als auch an den Sprühlanzen 3 im Bereich über der Pflanzenstützebene 8 angeordnet sein. Die Freisetzung eines Gases kann gemäß einem weiteren nicht gezeigten Ausführungsbeispiel auch über separate Gasauslasslanzen durchgeführt werden, welche keine Sprühdüsen 4 umfassen.

Diese Gasauslasslanzen können über ein gemeinsames Verbindungsstück 7, an dem auch Sprühlanzen 3 angeordnet sind, mit dem Linearantrieb 11 verbunden sein. Es ist jedoch auch möglich, dass die Gasauslasslanzen über einen eigenen Linearantrieb 11 angetrieben werden.

Über die Gasauslassöffnungen oder über die Gasauslasslanzen können verschiedene Gase, wie etwa Kohlendioxid, in den Bereich der Pflanzen 1 eingebracht werden. Die Zufuhr der Gase kann über Gaszuleitungen erfolgen.

In einem weiteren nicht gezeigten Ausführungsbeispiel sind mehrere übereinander angeordnete Pflanzenstützebenen vorgesehen, wie auch für das erste Ausführungsbeispiel beschrieben. Dadurch kann die benötigte Stellfläche für ein erfindungsgemäßes System reduziert werden, während die Anzahl an kultivierbaren Pflanzen gleich gehalten oder gegebenenfalls erhöht werden kann.

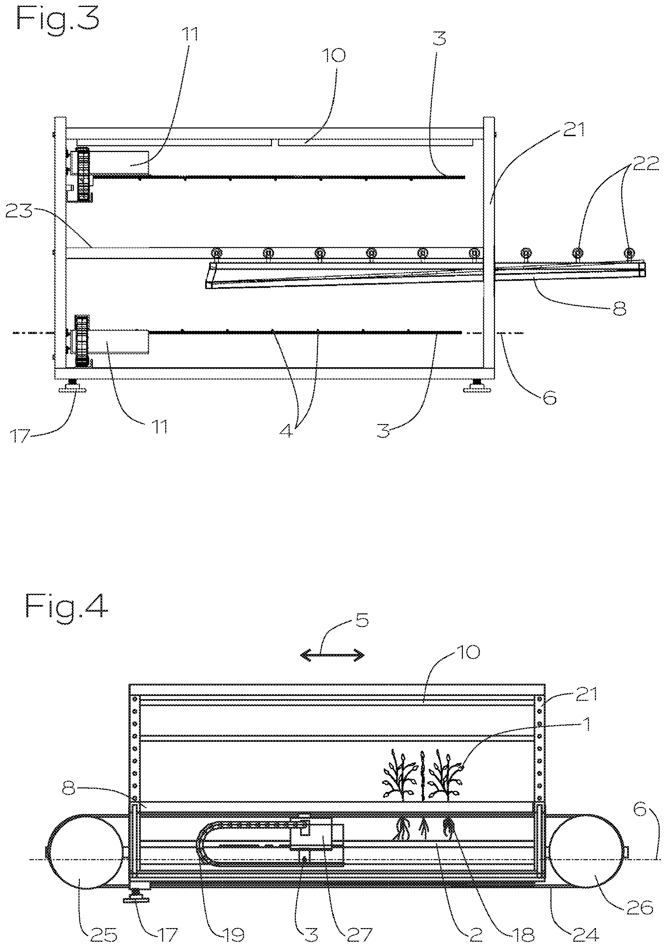

Die Fig. 3 zeigt eine Frontalansicht eines erfindungsgemäßen Systems zur aeroponischen Kultivierung von Pflanzen gemäß einem dritten Ausführungsbeispiel der Erfindung. Zur Vereinfachung der Illustration sind in diesem Ausführungsbeispiel keine Pflanzen 1 und keine Sprühkegel 12 dargestellt.

Bis auf die bewegliche Pflanzenstützebene 8 entspricht das dritte Ausführungsbeispiel dem in den Fig. 2a und 2b gezeigten zweiten Ausführungsbeispiel. Es ist also auch ein seitlich angeordneter Linearantrieb 11 zur Bewegung der Sprühlanzen 3 vorgesehen.

Im Unterschied zum zweiten Ausführungsbeispiel ist im dritten Ausführungsbeispiel eine ausziehbare Pflanzenstützebene 8 vorgesehen, welche zum Ablauf von überstehender Flüssigkeit eine Neigung aufweist. In der Fig. 3 ist diese im teilweise ausgezogenen Zustand gezeigt. Die Pflanzenstützebene 8 weist dabei an zwei zueinander parallel verlaufenden Außenkanten Laufrollen 22 auf, die als Bewegungsmittel dienen. In diesem Ausführungsbeispiel sind an beiden Außenkanten je neun Laufrollen 22 angeordnet. In weiteren, nicht gezeigten Ausführungsbeispielen kann jedoch eine andere Anzahl an Laufrollen 22 vorgesehen sein. In anderen Ausführungsbeispielen können auch Teleskopstangen als Bewegungsmittel verwendet werden.

Im hier beschriebenen dritten Ausführungsbeispiel eines erfindungsgemäßen Systems werden die Laufrollen 22 in einer an der Rahmenkonstruktion 21 des Systems angeordneten Führungsschiene gehalten. Die Führungsschiene ist in diesem Ausführungsbeispiel einstückig mit einem Abdeckprofil 23 ausgebildet. In anderen Ausführungsbeispielen kann die Führungsschiene auch getrennt von dem Abdeckprofil 23 ausgebildet sein. Das Abdeckprofil 23 dient dabei dem Schutz der Bewegungsmittel, insbesondere der Laufrollen 22 vor übermäßigem Feuchtigkeitseinfluss durch das erfindungsgemäße aeroponische System, beispielsweise durch absinkende Aerosoltröpfchen.

Die Pflanzenstützebene 8 ist in diesem Ausführungsbeispiel vollständig ausziehbar ausgebildet und kann somit auch vollständig aus der Rahmenkonstruktion 21 entfernt werden. Dadurch wird eine Bearbeitung von auf der Pflanzenstützebene 8 befindlichen Pflanzen erleichtert und auch ein Transfer der Pflanzenstützebene 8 in eine Rahmenkonstruktion 21 eines weiteren erfindungsgemäßen Systems ist möglich. Die Manipulation der Pflanzenstützebene 8 erfolgt vorteilhafterweise automatisiert durch einen Roboter oder eine ähnliche automatisierte oder automatisierbare Vorrichtung. Bevorzugt weist ein Aufnahmemechanismus des Roboters eine an die Geometrie der Laufrollen 22 angepasste Führungsschiene auf. Alternativ kann die Manipulation der Pflanzenstützebene 8 auch durch eine menschliche Arbeitskraft erfolgen.

Fig. 4 zeigt eine seitliche Ansicht einer vierten Ausführungsform eines erfindungsgemäßen Systems mit einer seitlichen Antriebsanordnung in Form eines Riemenantriebs. Ähnlich dem in Fig. 2a und 2b gezeigten zweiten Ausführungsbeispiel umfasst das System eine Rahmenkonstruktion 21, innerhalb welcher eine Pflanzenstützebene 8 angeordnet ist. Die Pflanzenstützebene 8 ist zur Aufnahme von Pflanzen 1 ausgebildet. In der gezeigten Ansicht ist zur Vereinfachung nur eine Pflanze 1 dargestellt. Die unterirdischen Pflanzenteile 18 sind unterhalb der Pflanzenstützebene 8 angeordnet. Ebenfalls unterhalb der Pflanzenstützebene 8 ist eine Sprühlanze 3 angeordnet, welche in einer Bewegungsebene 6 entlang einer Bewegungsrichtung 5 bewegbar ist. Die Versorgung der Pflanzen 1 mit UV-Strahlung erfolgt durch eine Beleuchtungsvorrichtung 10.

Der Antrieb der Sprühlanze ist in diesem Ausführungsbeispiel als Riemenantrieb ausgebildet, wobei ein Antriebsriemen 24 vorgesehen ist, welcher über eine erste Umlenkrolle 25 und eine zweite Umlenkrolle 26 geführt wird. Der Antriebsriemen 24 ist über einen Antriebsschlitten 27 mit der Sprühlanze 3 gekoppelt, wodurch eine Bewegung des Antriebsriemens 24 direkt in eine Bewegung der Sprühlanze entlang der Bewegungsrichtung 5 umgesetzt wird. Der Antriebsschlitten 27 wird an einer Führungsschiene 2 geführt. Eine Führung 19 dient der Aufnahme und Führung von Versorgungsleitungen, beispielsweise Wasserleitungen, die insbesondere Wasser zur Sprühlanze 3 leiten.

Die erste Umlenkrolle 25 wird über ein Übersetzungsgetriebe von einem Antriebsmotor angetrieben. Der Antriebsmotor ist in dieser Ansicht durch die erste Umlenkrolle 25 verdeckt und daher nicht sichtbar. Der Antriebsmotor ist mit einer Motorsteuerung verbunden, die beispielsweise eine Regelung der Drehzahl des Antriebsmotors ermöglicht. Durch die Bewegung der ersten Umlenkrolle 25 wird der Antriebsriemen 24 in Bewegung gesetzt, was auch eine Bewegung der Sprühlanze bewirkt. Die zweite Umlenkrolle 26 ist in diesem Ausführungsbeispiel nicht durch einen Antriebsmotor angetrieben, sondern dient lediglich der Umlenkung des Antriebsriemens 24. Der Antriebsriemen 24 ist in diesem Ausführungsbeispiel als Antriebsseil ausgebildet.

Die Führungsschiene 2 ist in diesem Ausführungsbeispiel als Profilschiene ausgebildet, wobei der Antriebsschlitten 27 über eine Führungskulisse an das Profil der Führungsschiene gekoppelt ist.

### Bezugszeichenliste

- 1: Pflanze
- 2: Führungsschiene
- 3: Sprühlanze
- 4: Sprühdüse
- 5: Bewegungsrichtung
- 6: Bewegungsebene
- 7: Verbindungsstück
- 8: Pflanzenstützebene
- 9: Spalt
- 10: Beleuchtungsvorrichtung
- 11: Linearantrieb
- 12: Sprühkegel
- 13: Wanne
- 14: Ablauf
- 15: Rolle
- 16: Neigungswinkel
- 17: Standfuß
- 18: Unterirdischer Pflanzenteil
- 19: Führung
- 20: Rastöffnung
- 21: Rahmenkonstruktion
- 22: Laufrolle
- 23: Abdeckprofil
- 24: Antriebsriemen
- 25: erste Umlenkrolle
- 26: zweite Umlenkrolle
- 27: Antriebsschlitten

## Patentansprüche

1. **System** zur substratlosen Kultivierung von Pflanzen, umfassend eine Vorrichtung zum Befeuchten und/oder Düngen von Pflanzen (1), welche eine bewegliche Sprühlanze (3) mit wenigstens einer an der Sprühlanze (3) angeordneten Sprühdüse (4) umfasst, wobei eine vorzugsweise lineare Führungsschiene (2) vorgesehen ist, wobei die Sprühlanze (3) in einer parallel zur Führungsschiene (2) verlaufenden Trajektorie in der Führungsschiene (2) beweglich geführt ist und sich im Wesentlichen normal auf diese Trajektorie erstreckt, und wobei ein Antrieb, vorzugsweise ein Linearantrieb (11), zur Bewegung der Sprühlanze im Bereich der Führungsschiene (2) angeordnet ist, wobei das System ferner eine vorzugsweise im Wesentlichen horizontal ausgerichtete Pflanzenstützebene (8) umfasst, welche dazu geeignet ist, die Pflanzen (1) im Bereich ihres Wurzelstocks zu stabilisieren, **dadurch gekennzeichnet, dass** die Sprühlanze (3) beabstandet unterhalb oder oberhalb der Pflanzenstützebene (8) angeordnet ist, dass sich die Pflanzenstützebene (8) im Wesentlichen parallel zu der durch die Bewegung der Sprühlanze (3) aufgespannten Bewegungsebene (6) erstreckt, und dass in der Pflanzenstützebene (8) ein vorzugsweise linear verlaufender Spalt (9) vorgesehen ist, durch den ein Verbindungsstück (7) zur Verbindung der Sprühlanze (3) mit der Führungsschiene (2) ragt, welches zur Verstellbarkeit der Position der Sprühlanze (3) eine Vielzahl an Befestigungsmitteln, vorzugsweise Rastöffnungen (20), umfasst.

2. System nach Anspruch 1, **dadurch gekennzeichnet, dass** die Sprühlanze (3) derart ausgeführt ist, dass im Wesentlichen die gesamte Fläche der Pflanzenstützebene (8) befeuchtet und/oder gedüngt werden kann.

3. System nach einem der Ansprüche 1 oder 2, **dadurch gekennzeichnet, dass** wenigstens zwei Sprühlanzen (3) vorgesehen sind, wobei vorzugsweise wenigstens eine Sprühlanze (3) oberhalb der Pflanzenstützebene (8) angeordnet ist und wenigstens eine Sprühlanze (3) unterhalb der Pflanzenstützebene (8) angeordnet ist.

4. System nach Anspruch 3, **dadurch gekennzeichnet, dass** die Sprühlanzen (3) über ein gemeinsames Verbindungsstück (7) an der Führungsschiene (2) gelagert sind und über einen gemeinsamen Antrieb bewegbar sind, oder dass die Sprühlanzen (3) über ein unabhängig voneinander an getrennten Führungsschienen (2) gelagert sind und über unabhängige Antrieb bewegbar sind.

5. System nach einem der Ansprüche 1 bis 4, **dadurch gekennzeichnet, dass** die Vorrichtung in einer Wanne (13) angeordnet ist oder eine Wanne (13) umfasst, deren Wannenboden gegenüber der Pflanzenstützebene (8) geneigt ist und vorzugsweise einen Neigungswinkel (16) von etwa 0,5° bis etwa 5° aufweist, und dass der Wannenboden optional einen Ablauf (14) zur Sammlung und gegebenenfalls Rückführung des aufgebrachten Mediums umfasst.

6. System nach einem der Ansprüche 1 bis 5, **dadurch gekennzeichnet, dass** eine Beleuchtungsvorrichtung (10) vorgesehen ist, wobei die Beleuchtungsvorrichtung (10) vorzugsweise im Bereich über der Pflanzenstützebene (8) angeordnet ist.

7. System nach einem der Ansprüche 1 bis 6, **dadurch gekennzeichnet, dass** das System eine Rahmenkonstruktion (21) umfasst, und dass wenigstens eine Pflanzenstützebene (8) relativ zur Rahmenkonstruktion (21) bewegbar gelagert ist, wobei die Pflanzenstützebene (8) optional in einer im Wesentlichen horizontal verlaufenden Ebene, vorzugsweise in einer parallel zur Bewegungsebene (6) der Sprühlanze (3) verlaufenden Ebene, bewegbar gelagert ist.

8. System nach Anspruch 7, **dadurch gekennzeichnet, dass** an der Pflanzenstützebene (8) Bewegungsmittel angeordnet sind, wobei die Bewegungsmittel vorzugsweise Laufrollen (22) oder Teleskopstangen umfassen, wobei optional vorgesehen ist, dass innerhalb der Rahmenkonstruktion (21) zum Schutz der Bewegungsmittel Abdeckprofile (23) vorgesehen sind, wobei die Abdeckprofile (23) die Bewegungsmittel wenigstens von oben bedecken.

9. System nach Anspruch 8, **dadurch gekennzeichnet, dass** an zwei zueinander parallel verlaufenden Außenkanten der Pflanzenstützebene (8) Bewegungsmittel angeordnet sind, wobei optional an zwei zueinander parallel verlaufenden Außenkanten der Pflanzenstützebene (8) je sechs bis zwölf Laufrollen (22), vorzugsweise je acht bis zehn Laufrollen (22), angeordnet sind.

10. System nach einem der Ansprüche 7 bis 9, **dadurch gekennzeichnet, dass** die Pflanzenstützebene (8) vollständig aus der Rahmenkonstruktion (21) ausziehbar ist.

11. System nach einem der Ansprüche 1 bis 10, **dadurch gekennzeichnet, dass** an der Sprühlanze (3) Aktoren, beispielsweise zur Aussaat von Samen oder Ernte von Pflanzen oder Früchten, Sensoren, beispielsweise zur Diagnostik von Pflanzen, oder Kameras angeordnet sind.

12. System nach einem der Ansprüche 1 bis 11, **dadurch gekennzeichnet, dass** die Sprühlanze (3) drei bis zehn Sprühdüsen (4) umfasst, die zur Erzeugung eines Aerosols mit einer Tröpfchengröße von 1 µm bis 100 µm in einem Druckbereich von 8 bar bis 100 bar ausgeführt ist, wobei das Aerosol optional ein Nährmedium und/oder Wasser umfasst.

13. System nach Anspruch 12, **dadurch gekennzeichnet, dass** wenigstens zwei Sprühdüsen (4) zur Erzeugung einander überlappender Sprühkegel (12) ausgeführt sind.

14. System nach einem der Ansprüche 1 bis 13, **dadurch gekennzeichnet, dass** an der Sprühlanze (3) Gasauslassöffnungen vorgesehen sind, oder dass eine Gasauslasslanze mit Gasauslassöffnungen in der Führungsschiene (2) beweglich geführt ist.

15. System nach einem der Ansprüche 1 bis 14, **dadurch gekennzeichnet, dass** der Antrieb als Riemenantrieb ausgebildet ist, wobei der Riemenantrieb einen stationär angeordneten Antriebsmotor umfasst.

16. System nach Anspruch 15, **dadurch gekennzeichnet, dass** die Sprühlanze (3) durch einen endlos umlaufenden Antriebsriemen (24) bewegbar ist, wobei der Antriebsriemen (24) durch Umlenkrollen (25, 26) geführt ist.

## Claims

1. A **system** for cultivating plants without a substrate, comprising a device for moistening and/or fertilizing plants (1), the device comprising a movable spray lance (3) with at least one spray nozzle (4) arranged on the spray lance (3), wherein a preferably linear guide rail (2) is provided, wherein the spray lance (3) is movably guided in the guide rail (2) in a trajectory extending parallel to the guide rail (2) and extends substantially perpendicular to this trajectory, and wherein a drive, preferably a linear drive (11), is arranged for moving the spray lance in the area of the guide rail (2), wherein the system further comprises a preferably substantially horizontal plant support plane (8) adapted to stabilise the plants (1) in their rootstock region, **characterised in that** the spray lance (3) is arranged at a distance below or above the plant support plane (8) and **in that** the plant support plane (8) extends substantially parallel to the movement plane (6) defined by the movement of the spray lance (3), and **in that** a preferably linear gap (9) is provided in the plant support plane (8), through which a connector (7) for connecting the spray lance (3) and the guide rail (2) projects, the connector comprising a plurality of securing means, preferably latch openings (20), for adjusting the position of the spray lance (3).

2. The system of claim 1, **characterized in that** the spray lance (3) is designed such that substantially the entire surface of the plant support plane (8) may be moistened and/or fertilized.

3. The system of any one of claims 1 or 2, **characterized in that** at least two spray lances (3) are provided, wherein preferably at least one spray lance (3) is arranged above the plant support plane (8) and at least one spray lance (3) is arranged below the plant support plane (8).

4. The system of claim 3, **characterized in that** the spray lances (3) are mounted on the guide rail (2) via a common connector (7) and are movable via a common drive, or **in that** the spray lances (3) are mounted independently of one another on separate guide rails (2) and are movable via independent drives.

5. The system of any one of claims 1 to 4, **characterized in that** the device is arranged in a tray (13) or comprises a tray (13), the tray bottom of which is inclined relative to the plant support plane (8) and preferably has a tilt angle (16) of about 0.5° to about 5°, and **in that** the tray bottom optionally comprises a drain (14) for collecting and optionally reintroducing the medium applied.

6. The system of any one of claims 1 to 5, **characterized in that** a lighting device (10) is provided, the lighting device (10) preferably being arranged in the area above the plant support plane (8).

7. The system of any one of claims 1 to 6, **characterized in that** the system comprises a frame structure (21) and **in that** at least one plant support plane (8) is movably mounted relative to the frame structure (21), wherein the plant support plane (8) is optionally movably mounted in a substantially horizontal plane, preferably in a plane parallel to the movement plane (6) of the spray lance (3).

8. The system of claim 7, **characterized in that** movement means are arranged on the plant support plane (8), the movement means preferably comprising rollers (22) or telescopic rods, wherein it is optionally provided that cover profiles (23) are provided within the frame structure (21) for protecting the movement means, the cover profiles (23) covering the movement means at least partially from above.

9. The system of claim 8, **characterized in that** movement means are arranged on two outer edges of the plant support plane (8), which extend parallel to one another, wherein optionally six to twelve rollers (22) each, preferably eight to ten rollers (22) each, are arranged on two outer edges of the plant support plane (8), which extend parallel to one another.

10. The system of any one of claims 7 to 9, **characterized in that** the plant support plane (8) can be completely extracted from the frame structure (21).

11. The system of any one of claims 1 to 10, **characterized in that** actuators, e.g. for sowing seeds or harvesting plants or fruits, sensors, e.g. for obtaining plant diagnoses, or cameras are arranged on the spray lance (3).

12. The system of any one of claims 1 to 11, **characterized in that** the spray lance (3) comprises three to ten spray nozzles (4) which is designed to generate an aerosol with a droplet size of 1 µm to 100 µm in a pressure range of 8 bar to 100 bar, wherein the aerosol optionally comprises a nutrient medium and/or water.

13. The system of claim 12, **characterized in that** at least two spray nozzles (4) are designed to create overlapping spray cones (12).

14. The system of any one of claims 1 to 13, **characterized in that** gas outlet openings are provided on the spray lance (3) or **in that** a gas outlet lance with gas outlet openings is movably guided in the guide rail (2).

15. The system of any one of claims 1 to 14, **characterized in that** the drive is designed as a belt drive, wherein the belt drive comprises a stationarily arranged drive motor.

16. The system of claim 15, **characterized in that** the spray lance (3) is movable via an endlessly revolving drive belt (24), the drive belt (24) being guided by deflection rollers (25, 26).

## Revendications

1. **Système** pour la culture de plantes sans substrat, comprenant un dispositif pour l'humidification et/ou la fertilisation de plantes (1), qui comprend une lance de pulvérisation (3) mobile avec au moins une buse de pulvérisation (4) disposée sur la lance de pulvérisation (3), dans lequel un rail de guidage (2), de préférence linéaire, est prévu, dans lequel la lance de pulvérisation (3) est guidée de manière mobile dans le rail de guidage (2) selon une trajectoire parallèle au rail de guidage (2) et s'étend substantiellement normalement sur cette trajectoire, et dans lequel un entraînement, de préférence un entraînement linéaire (11), est disposé dans la zone du rail de guidage (2) pour déplacer la lance de pulvérisation, le système comprenant en outre un plan de support de plantes (8), de préférence orienté substantiellement horizontalement, qui est adapté pour stabiliser les plantes (1) dans la zone de leur rhizome, **caractérisé en ce que** la lance de pulvérisation (3) est disposée à distance en-dessous ou au-dessus du plan de support de plantes (8), **en ce que** le plan de support de plantes (8) s'étend substantiellement parallèlement au plan de déplacement (6) tendu par le déplacement de la lance de pulvérisation (3), et **en ce que** dans le plan de support de plantes (8) est prévue une fente (9) s'étendant de préférence de manière linéaire, à travers laquelle fait saillie une pièce de liaison (7) pour relier la lance de pulvérisation (3) au rail de guidage (2), qui comprend une pluralité de moyens de fixation, de préférence des ouvertures d'encliquetage (20), pour permettre le réglage de la position de la lance de pulvérisation (3).

2. Système selon la revendication 1, **caractérisé en ce que** la lance de pulvérisation (3) est réalisée de telle sorte que substantiellement toute la surface du plan de support de plantes (8) peut être humidifiée et/ou fertilisée.

3. Système selon l'une des revendications 1 ou 2, **caractérisé en ce que** au moins deux lances de pulvérisation (3) sont prévues, de préférence au moins une lance de pulvérisation (3) étant disposée au-dessus du plan de support des plantes (8) et au moins une lance de pulvérisation (3) étant disposée en-dessous du plan de support des plantes (8).

4. Système selon la revendication 3, **caractérisé en ce que** les lances de pulvérisation (3) sont montées sur le rail de guidage (2) par une pièce de liaison (7) commune et sont déplaçables par un entraînement commun, ou **en ce que** les lances de pulvérisation (3) sont montées indépendamment les unes des autres sur des rails de guidage (2) séparés et sont déplaçables par un entraînement indépendant.

5. Système selon l'une des revendications 1 à 4, **caractérisé en ce que** le dispositif est disposé dans une cuve (13) ou comprend une cuve (13) dont le fond de cuve est incliné par rapport au plan de support des plantes (8) et présente de préférence un angle d'inclinaison (16) d'environ 0,5° à environ 5°, et **en ce que** le fond de cuve comprend éventuellement un écoulement (14) pour la collecte et éventuellement le renvoi du milieu appliqué.

6. Système selon l'une des revendications 1 à 5, **caractérisé en ce qu'**un dispositif d'éclairage (10) est prévu, le dispositif d'éclairage (10) étant de préférence disposé dans la zone située au-dessus du plan de support de plantes (8).

7. Système selon l'une des revendications 1 à 6, **caractérisé en ce que** le système comprend une structure de cadre (21), et **en ce qu'**au moins un plan de support de plantes (8) est monté déplaçable par rapport à la structure de cadre (21), le plan de support de plantes (8) étant éventuellement monté déplaçable dans un plan s'étendant substantiellement horizontalement, de préférence dans un plan s'étendant parallèlement au plan de déplacement (6) de la lance de pulvérisation (3).

8. Système selon la revendication 7, **caractérisé en ce que** des moyens de déplacement sont disposés sur le plan de support de plantes (8), les moyens de déplacement comprenant de préférence des galets de roulement (22) ou des barres télescopiques, étant prévu éventuellement que des profilés de recouvrement (23) sont prévus à l'intérieur de la structure de cadre (21) pour protéger les moyens de déplacement, les profilés de recouvrement (23) recouvrant les moyens de déplacement au moins par le haut.

9. Système selon la revendication 8, **caractérisé en ce que** des moyens de déplacement sont disposés sur deux bords extérieurs parallèles entre eux du plan de support de plantes (8), dans lequel, éventuellement, six à douze galets de roulement (22), de préférence huit à dix galets de roulement (22), sont disposés sur chacun des deux bords extérieurs parallèles entre eux du plan de support de plantes (8).

10. Système selon l'une des revendications 7 à 9, **caractérisé en ce que** le plan de support de plantes (8) est entièrement extensible hors de la structure de cadre (21).

11. Système selon l'une des revendications 1 à 10, **caractérisé en ce que** des actionneurs, par exemple pour semer des graines ou récolter des plantes ou des fruits, des capteurs, par exemple pour diagnostiquer des plantes, ou des caméras sont disposés sur la lance de pulvérisation (3).

12. Système selon l'une des revendications 1 à 11, **caractérisé en ce que** la lance de pulvérisation (3) comprend trois à dix buses de pulvérisation (4) adaptées pour produire un aérosol ayant une taille de gouttelettes de 1 µm à 100 µm dans une plage de pressions de 8 bars à 100 bars, ledit aérosol comprenant éventuellement un milieu nutritif et/ou de l'eau.

13. Système selon la revendication 12, **caractérisé en ce qu'**au moins deux buses de pulvérisation (4) sont réalisées pour produire des cônes de pulvérisation (12) se chevauchant.

14. Système selon l'une des revendications 1 à 13, **caractérisé en ce que** des ouvertures de sortie de gaz sont prévues sur la lance de pulvérisation (3), ou **en ce qu'**une lance de sortie de gaz avec des ouvertures de sortie de gaz est guidée de manière mobile dans le rail de guidage (2).

15. Système selon l'une des revendications 1 à 14, **caractérisé en ce que** l'entraînement est conçu comme un entraînement par courroie, l'entraînement par courroie comprenant un moteur d'entraînement disposé de manière stationnaire.

16. Système selon la revendication 15, **caractérisé en ce que** la lance de pulvérisation (3) est déplaçable par une courroie d'entraînement (24) tournant sans fin, la courroie d'entraînement (24) étant guidée par des galets de renvoi (25, 26).
